(19) Europäisches Patentamt
European Patent Office
Office européen des brevets

(11) **EP 2 522 465 B1**

(12) **EUROPÄISCHE PATENTSCHRIFT**

(45) Veröffentlichungstag und Bekanntmachung des Hinweises auf die Patenterteilung:
**11.06.2014 Patentblatt 2014/24**

(51) Int Cl.:
***B25B 29/02*** *(2006.01)*    ***B23P 19/06*** *(2006.01)*
***G01D 5/245*** *(2006.01)*

(21) Anmeldenummer: **12164002.3**

(22) Anmeldetag: **12.04.2012**

(54) **Vorrichtung zum kontrollierten Verspannen von Flanschverbindungen**

Device for controlled tensioning of flange connections

Dispositif de serrage contrôlé de raccordements par bride

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.05.2011 DE 102011075807**

(43) Veröffentlichungstag der Anmeldung:
**14.11.2012 Patentblatt 2012/46**

(73) Patentinhaber: **AMTEC Advanced Measurement Messtechnischer Service GmbH 74348 Lauffen (DE)**

(72) Erfinder:
• **SCHAAF, Manfred**
 **74382 Neckarwestheim (DE)**
• **EISELE, Mark**
 **74388 Talheim (DE)**

(74) Vertreter: **Gauss, Nikolai et al Wolf & Lutz Patentanwälte Hauptmannsreute 93 70193 Stuttgart (DE)**

(56) Entgegenhaltungen:
WO-A1-86/05135          WO-A1-2006/000677
WO-A1-2011/120589          WO-A2-2006/105931
US-A1- 2008 180 094          US-B1- 6 515 471

## Beschreibung

Die Erfindung betrifft eine Messeinrichtung, ein Spannmodul sowie eine Vorrichtung für das kontrollierte Verspannen eines ersten Teils mit einem dem ersten Teil gegenüberliegenden zweiten Teil einer Flanschverbindung mit einer Messeinrichtung. Die Messeinrichtung hat einen an einem Träger aufgenommenen Sensor. Mit der Messeinrichtung kann die beim Verspannen hervorgerufene Längenänderung eines Spannorgans erfasst werden, das an einem ersten Teil der Flanschverbindung verankert ist und durch ein zweites Teil der Flanschverbindung hindurchgreift.

Flanschverbindungen werden insbesondere in der chemischen Industrie und in Kraftwerken eingesetzt, um Zugänge in Druckbehälter oder Reaktoren zu verschließen oder um Rohrleitungen zu verbinden. Diese Flanschverbindungen haben ein erstes Flanschteil und ein zweites Flanschteil. Zwischen dem ersten und dem zweiten Flanschteil der Flanschverbindung befindet sich ein Dichtkörper. Damit die Dichtheit und/oder das Einhalten einer vorgeschriebenen Leckrate bei solchen Flanschverbindungen gewährleistet ist, muss die Dichtung ausreichend verformt werden. Hierfür werden bei Flanschverbindungen Spannorgane in Form von Spannbolzen eingesetzt, die mittels Muttern, die auf den Spannbolzen aufgedreht sind, aneinanderliegende Teile der Flanschverbindung verspannen. Bei dem Verspannen der Flanschverbindung werden die Spannbolzen gedehnt. Die Dehnung von Spannbolzen kann mit Messeinrichtungen (z. B. WO 2006/000677 A1) erfasst werden. Aus der Dehnung eines Spannbolzens lassen sich Rückschlüsse auf die Kraft ziehen, mit welcher ein zwischen den Flanschteilen einer Flanschverbindung angeordneter Dichtkörper verformt wird.

*In der WO 2011/120589 A1 nach Art. 54(3) EPÜ ist eine Messeinrichtung mit einem an einem Träger aufgenommenen Sensor für das Erfassen einer beim Verspannen einer Flanschverbindung hervorgerufenen Längenänderung an einem Spannorgan beschrieben. Dieses Spannorgan ist an einem ersten Teil der Flanschverbindung verankert und greift durch ein zweites Teil der Flansch-verbindung hindurch. Der Sensor ist über ein an dem Träger angeordnetes elektrisches Bauelement mit einer elektronischen Baugruppe elektrisch verbunden. Diese Baugruppe ist ebenfalls an dem Träger aufgenommen und dient für das drahtlose Übermitteln von Messinformation an einen Signalempfänger.*

Aufgabe der Erfindung ist es, eine Vorrichtung bereitzustellen, mit welcher die Verspannung einer Flanschverbindung in einer chemischen Anlage oder in einem Kraftwerk in kurzer Zeit auf einen definierten Wert eingestellt und überwacht werden kann. Nicht zuletzt in Gefahrbereichen von Anlagen oder in Zonen von Kernkraftwerken, in denen radioaktive Strahlung auftritt, ist es wünschenswert, dass einer einzelnen Person das Montieren, das Einstellen und Überwachen von Flanschverbindungen, die eine Vielzahl von Spannorganen haben, schnell und dadurch zuverlässig sowie mit großer Genauigkeit möglich ist.

Diese Aufgabe wird durch eine Messeinrichtung sowie ein Spannmodul und eine Vorrichtung der eingangs genannten Art gelöst, bei der die Messeinrichtung für das Erfassen der beim Verspannen hervorgegangenen Längenänderung eines Spannorgans eine elektronische Baugruppe für das drahtlose Übermitteln von Messinformation aus der Messeinrichtung an einen Signalempfänger aufweist, der zusammen mit dem Sensor an dem Träger aufgenommen ist und dort über ein elektronisches Bauelement mit dem Sensor verbunden ist.

Der Erfindung liegt die Erkenntnis zugrunde, dass das Überwachen und Einstellen von Flanschverbindungen mit einer Vielzahl von Spannorganen insbesondere deshalb zeitintensiv ist, weil es bei herkömmlichen Vorrichtungen und Messeinrichtungen erforderlich ist, dass eine große Anzahl von Kabelverbindungen zu einem Rechner für das Erfassen von Messdaten gelegt wird.

Hierfür ist es insbesondere von Vorteil, wenn die elektronische Baugruppe der Messeinrichtung für eine drahtlose bidirektionale Kommunikation mit einem Steuerrechner ausgelegt ist. Bevorzugt enthält die Messeinrichtung eine Anzeigeeinheit für das Anzeigen einer günstigen und/oder ungünstigen Längenänderung des Spannorgans, wenn die Flanschverbindung verspannt wird. Bevorzugt weist die Messeinrichtung einen mit der Anzeigeeinheit verbundenen Signalschaltkreis auf. Bei Erfassen einer günstigen oder ungünstigen Längenänderung des Spanorgans gibt der Signalschaltkreis der Messeinrichtung ein Anzeigesignal ab. Von Vorteil ist es auch, wenn die Anzeigeeinheit wenigstens eine Leuchtdiode und/oder ein Display für das Anzeigen einer günstigen und/oder ungünstigen Längenänderung eines Spanorgans aufweist.

Die Vorrichtung enthält für das Verspannen der Flanschverbindung ein Spannmodul. Bevorzugt hat dieses Spannmodul ein an dem zweiten Teil der Flanschverbindung abstützbares Mittel zum Erzeugen einer Zugkraft mit einem Fenster, durch das eine mit einem Gewinde an dem Spannorgan aufgenommene Mutter bewegt werden kann. Diese Maßnahme ermöglicht, dass die Mutter von einer Montageperson sehr schnell eingestellt werden kann. Indem das Spannmodul Getriebemittel für das Verstellen der auf dem Spannorgan geführten Mutter umfasst, ist insbesondere ein ferngesteuertes Bewegen von Flanschmuttern der Flanschverbindung möglich.

Eine Idee der Erfindung ist auch, die Längung von Spannorganen in der Flanschverbindung mit einem magnetischen Messprinzip zu erfassen. Hierzu enthält die Messeinrichtung wenigstens einen Magnetisierungssensor und hat einen beweglichen Messfühler für das Erfassen einer beim Verspannen hervorgerufenen Längung des Spannorgans. Der Messfühler ist mit einem Trägerelement gekoppelt, das verlagerbar ist. An dem Trägerelement befindet sich agnetisierungsmaterial, das Zonen mir unterschiedlicher Magnetisierung aufweist. Indem die Magnetisierung dieser Zonen mit dem wenigstens einen Magnetisierungssensor erfasst wird, ist es möglich, auf die Längenänderung eines entsprechenden Spannorgans zu schließen.

Die Längung von Spannorganen in der Flanschverbindung kann allerdings auch mit einem optischen Messprinzip ermittelt werden. Die Messeinrichtung wird hierfür mit einem beweglichen Messfühler für das Erfassen einer beim Verspannen hervorgerufenen Längung des Spannorgans ausgebildet, der mit einem Trägerelement gekoppelt ist, das eine optische Skala mit Skalenmarkierungen trägt. Die Messeinrichtung enthält einen optischen Sensor. Mit dem optischen Sensor kann die mit einer Bewegung des Messfühlers verbundene Verlagerung der Skalenmarkierungen erfasst werden. Dies ermöglicht es, durch Abzählen von Skalenmarkierungen, die an dem optischen Sensor vorbeibewegt werden, auf eine Längenänderung des entsprechenden Spannorgans zu schließen.

Ein Gedanke der Erfindung ist insbesondere, mehrere Spannmodule mit einem an dem ersten Teil abstützbaren Mittel für das Erzeugen einer Zugkraft vorzusehen. Die abstützbaren Mittel sind dabei jeweils an ein an dem ersten Teil der Flanschverbindung verankertes, durch das zweite Teil der Flanschverbindung hindurchgreifendes Spannorgan anschließbar. Jedes Spannmodul enthält hier eine Messeinrichtung für das Erfassen einer beim Verspannen hervorgerufenen Längung des Spannorgans mit einer elektronischen Baugruppe für das drahtlose Übermitteln von Messinformation an einen Signalempfänger.

Von Vorteil ist es, wenn die Messeinrichtung eines jeden Spannmoduls eine elektronische Baugruppe für das Übermitteln von Messinformation an einen Signalempfänger enthält. Insbesondere ist es von Vorteil, wenn die elektronische Baugruppen der Spannmodule für das Übermitteln von Messinformation auf unterschiedlichen Übertragungskanälen oder in unterschiedlichen Zeitfenstern an den Signalempfänger ausgelegt sind.

Besonders hohe Verspannungskräfte können erzeugt werden, indem die Mittel für das Erzeugen einer Zugkraft an eine gemeinsame Versorgungsleitung für Hydraulikfluid angeschlossene Hydraulikmittel sind. Die Spannmodule können z.B. an einem ringförmigen Träger festgelegt sein, in dem die Versorgungsleitung für das Hydraulikfluid geführt ist.

Für das Erfassen von Messinformation aus der Messeinrichtung gibt es in dem wenigstens einen Spannmodul einen Signalempfänger. Günstigerweise ist die Messeinrichtung in dem wenigstens einen Spannmodul über eine Rechnereinheit mit einer Sende- und Empfangseinheit steuerbar.

Bei dem Verspannen einer Flanschverbindung mit einer erfindungsgemäßen Vorrichtung werden mehrere, an einem ersten Teil der Flanschverbindung verankerte und durch ein zweites Teil der Flanschverbindung hindurchgreifender Spannorgane gleichzeitig mit einer Zugkraft beaufschlagt. Die durch das Verspannen hervorgerufene Längung eines jeden Spannorgans wird dabei erfasst. Die erfasste Längung eines jeden Spannorgans wird dann drahtlos an eine gemeinsame Anzeigeeinheit übermittelt.

Im Folgenden wird die Erfindung anhand der in der Zeichnung in schematischer Weise dargestellten Ausführungsbeispiele näher erläutert.

Es zeigen:

Fig. 1    eine Vorrichtung mit mehreren Messeinrichtungen und Spannmodulen für das kontrollierte Verspannen einer Flanschverbindung durch Beaufschlagen einer Vielzahl von Spannorganen mit Zugkraft;

Fig. 2    ein Spannmodul der Vorrichtung mit einer Messeinrichtung und einem Spannorgan;

Fig. 3a    und 3b unterschiedliche Spannzustände eines Spanorgans der Flanschverbindung;

Fig. 4    den Aufbau einer Messeinrichtung;

Fig. 5    ein mit der Messeinrichtung erfasstes Messsignal; und

Fig. 6    Messeinrichtungen und die Anzeige des Monitors eines Steuerrechners der Vorrichtung für das kontrollierte Vorspannen einer Flanschverbindung.

Die Vorrichtung 10 für das kontrollierte Verspannen eines ersten Teils mit einem dem ersten Teil gegenüberliegenden zweiten Teil einer Flanschverbindung ist an eine Flanschverbindung 12 angeschlossen. Die Flanschverbindung 12 hat ein Flanschteil 14, das an einem Rohrkörper 16 ausgebildet ist. Das Flanschteil 14 umgibt eine Öffnung 18 in das Innere des Rohrkörpers 16.

Auf dem Flanschteil 14 ist ein Flanschteil 20 positioniert. Der Flanschteil 20 ist ein Deckelteil. Zwischen dem Flanschteil 14 und dem Flanschteil 20 befindet sich eine ringförmig ausgebildete Flachdichtung 22. Mittels des Flanschteils 20 kann die Öffnung 18 in das Innere des Rohrkörpers 16 verschlossen werden.

Das Flanschteil 20 ist mit mehreren Spannorganen 24 an dem Flanschteil 14 festgelegt. Die Spannorgane 24 sind als Hohlspannbolzen 24 ausgeführt. Die Spannbolzen 24 sind mit einem Schraubengewinde in einer Gewindebohrung 26 in dem Flanschteil 14 verankert.

Für das Verspannen der Flanschverbindung 12 hat die Vorrichtung 10 zwölf Spannmodule 28. Die Spannmodule 28 sind an Ringsegmenten 29, 31, 33 festgelegt, die einen Ringkörper 30 bilden. Die Spannmodule 28 haben ein Spannelement, mit dem ein Spannbolzen 24 verspannt werden kann. Die Spannmodule 28 enthalten ein Arbeitsvolumen für Hydraulikfluid. Durch Einstellen eines Hydraulikdrucks in dem Arbeitsvolumen eines Spannmoduls 28 kann das Spannelement in einem Spannmodul 28 betätigt werden.

Um die Flanschverbindung 12 zu verspannen, gibt es in der Vorrichtung 10 eine Hydraulikpumpe 32. Die Hydraulikpumpe 32 ist über Hydraulikleitungen 34, 37, 39 mit Leitungen für Hydraulikfluid in den Ringsegmenten 29, 31, 33 verbunden. Das Arbeitsvolumen in einem Spannmodul 28 kann durch die Ringleitung mit Hydraulikfluid gespeist werden. Für das Einstellen des Hydraulikdrucks in den Arbeitsvolumina der Spannmodule 28 ist in der Hydraulikleitung 34 eine Druckverteilsteuereinrichtung 36 angeordnet. Die Arbeitsvolumina der Spannmodule 28 liegen parallel zueinander an den in den Ringsegmenten 29, 21, 33 verlaufenden Ringleitung für Hydraulikfluid.

Der segmentförmige Aufbau des Ringkörpers 30 ermöglicht ein Zerlegen der Vorrichtung 30 in Abschnitte, die eine Montageperson tragen kann. Grundsätzlich kann natürlich der Ringkörper 30 auch ohne einen segmentartigen Aufbau mit einer geschlossenen Ringleitung ausgeführt werden, an dem eine Vielzahl von Spannmodulen 28 festgelegt sind.

Für das Erfassen einer beim Verspannen der Flanschverbindung 12 hervorgerufenen Längung der Spannbolzen 24 gibt es für jeden Spannbolzen 24 eine Messeinrichtung 38. Die Messeinrichtung 38 hat einen Träger 39, in dem zwei Sensoren mit elektronischen Baugruppen aufgenommen sind. Die Messeinrichtung 38 ist für drahtlose bidirektionale Kommunikation mit einem Steuerrechner 40 ausgelegt. Der Steuerrechner 40 enthält eine Eingabeeinheit 41 und hat einen Monitor 43. Für die drahtlose bidirektionale Kommunikation mit den Messeinrichtungen 38 ist der Steuerrechner 40 an eine Einheit 42 für das Senden und Empfangen von Funksignalen angeschlossen.

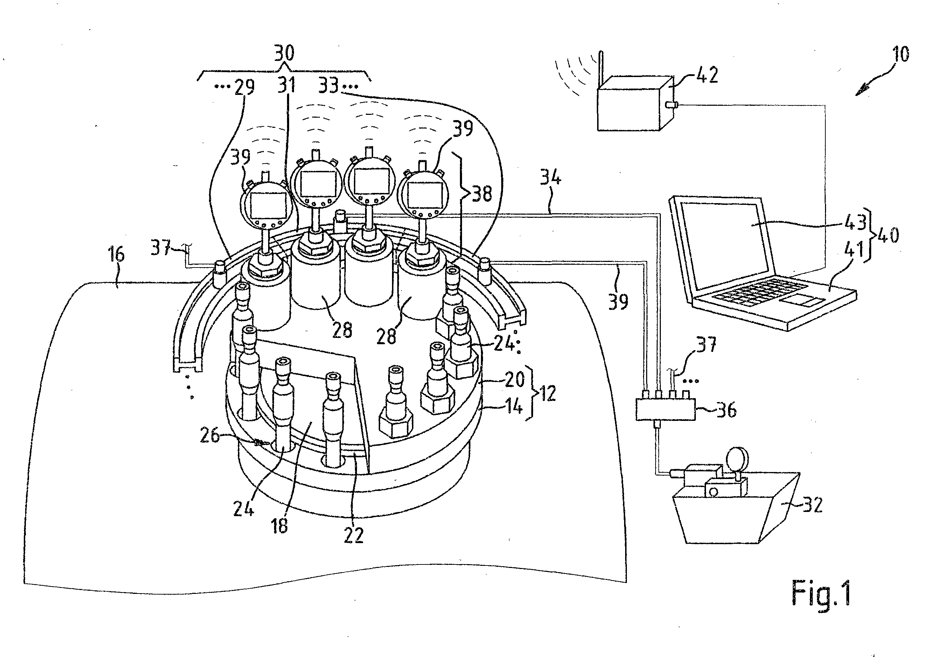

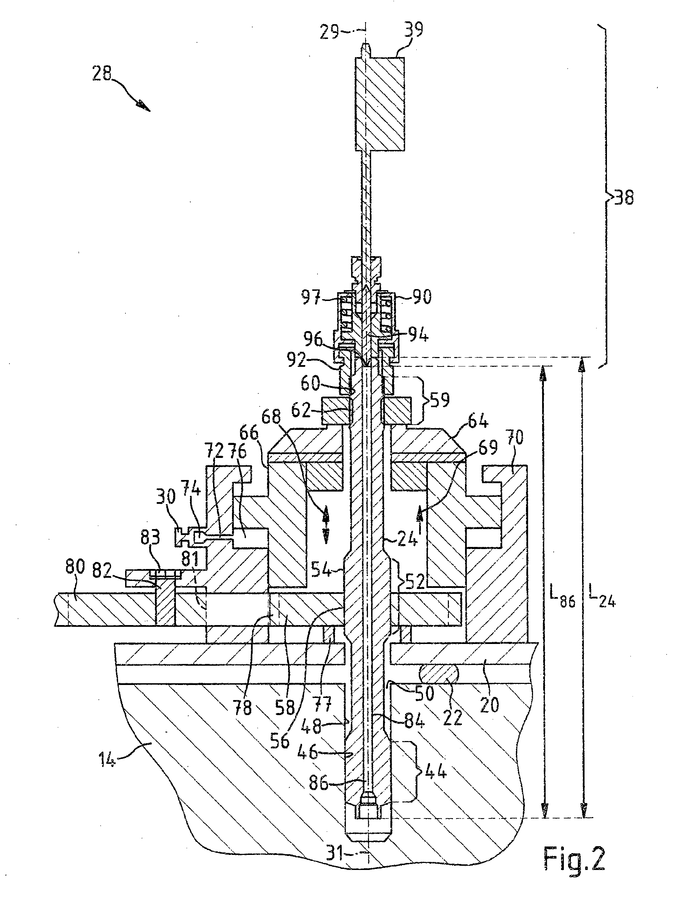

Die Fig. 2 ist eine Schnittansicht eines Spannmoduls 28 in der Vorrichtung 10 aus Fig. 1 mit einem Spannbolzen 24. Ein jedes Spannmodul 28 und ein jeder Spannbolzen 24 in der Vorrichtung 10 sind aufeinander abgestimmt. Ein jedes Spannmodul 28 hat eine Achse 29, die mit der Achse 31 eines Spannbolzens 24 fluchtet.

Der Spannbolzen 24 hat einen Abschnitt 44, in dem ein Außengewinde 46 ausgebildet ist. Mit dem Außengewinde 46 kann der Spannbolzen 24 in das Gewinde 48 einer Gewindebohrung 50 in dem Flanschteil 14 eingreifen und darin verankert werden. In einem Abschnitt 52 hat der Spannbolzen 24 ein Außengewinde 54. Das Außengewinde 54 ist mit dem Innengewinde 56 einer Mutter 58 in Eingriff. In einem Abschnitt 59 an dem Spannbolzen 24 gibt es ein Außengewinde 60. Das Außengewinde 60 des Spannbolzens 24 wirkt auf ein Innengewinde 62, das in einem Deckelteil 64 des Spannmoduls 28 ausgebildet ist.

Das Deckelteil 64 kann über ein mit Hydraulikkraft bewegbares Spannelement 66 in der Richtung der Doppelpfeils 68 verlagert werden. Das Spannelement 66 ist in einem Abstützteil 70 linearbeweglich geführt. Das Abstützteil 70 ist an dem Flanschteil 20 abgestützt. Das Abstützteil 70 enthält eine Leitung 72 für Hydraulikfluid. Die Leitung 72 verbindet die Ringleitung 74 in dem Ringkörper 30 mit einem Hydraulik-Arbeitsvolumen 76. Durch Beaufschlagen des Hydraulik-Arbeitsvolumens 76 mit Hydraulikdruck kann auf den Spannbolzen 24 eine Zugkraft ausgeübt werden. Bei einem Beaufschlagen des Spannbolzens 24 mit Zugkraft wird die in Fig. 1 gezeigte Flanschverbindung 12 verspannt. Dabei wird die Flachdichtung 22 zwischen Flanschteil 14 und dem Flanschteil 20 zusammengedrückt.

Zwischen der Mutter 58 und dem Flanschteil 20 befindet sich eine Abstandshülse 77. Die Mutter 58 hat eine Außenverzahnung 78. Die Außenverzahnung 78 ist mit einem Zahnrad 80 in Eingriff. Das Zahnrad 80 ragt durch ein in dem Abstützteil 70 ausgebildetes Fenster 81. Das Zahnrad 80 ist auf einer Welle 82 festgelegt, die an dem Abstützteil 70 drehbar gelagert ist. Das Zahnrad 80 kann über einen chlüsseleingriff 83 für einen Steckschlüssel einer nicht weiter gezeigten Verstelleinrichtung bewegt werden. Durch Bewegen des Zahnrads 80 kann die Mutter 58 in dem Abschnitt 52 des Spannbolzens 24 verlagert werden.

Der Spannbolzen 24 hat eine durchgehende Bohrung 84. In der Bohrung 84 ist ein Innenstift 86 positioniert. Der Innenstift 86 ist ein Messstift. Der Innenstift 86 ist auf der zu dem Flanschteil 14 weisenden Seite in ein Gewinde 86 in dem Spannbolzen 24 eingeschraubt. Wenn das Hydraulik-Arbeitsvolumen 76 mit Hydraulikfluid beaufschlagt wird, das unter Druck steht, verändert sich die Länge des Spannbolzens 24. Der Spannbolzen 24 wird dabei in Richtung des Pfeils 69 gedehnt. Weil dabei der Innenstift 86 in dem Spannbolzen 24 anders als der Spannbolzen 24 nicht mit Zugkraft beaufschlagt wird, variiert dabei die Länge des Innenstifts 86 nicht. Das führt zu einer Änderung des Unterschieds $\Delta L$ zwischen der Länge $L_{24}$ des Spannbolzens 24 und der Länge $L_{86}$ des Innenstifts 86.

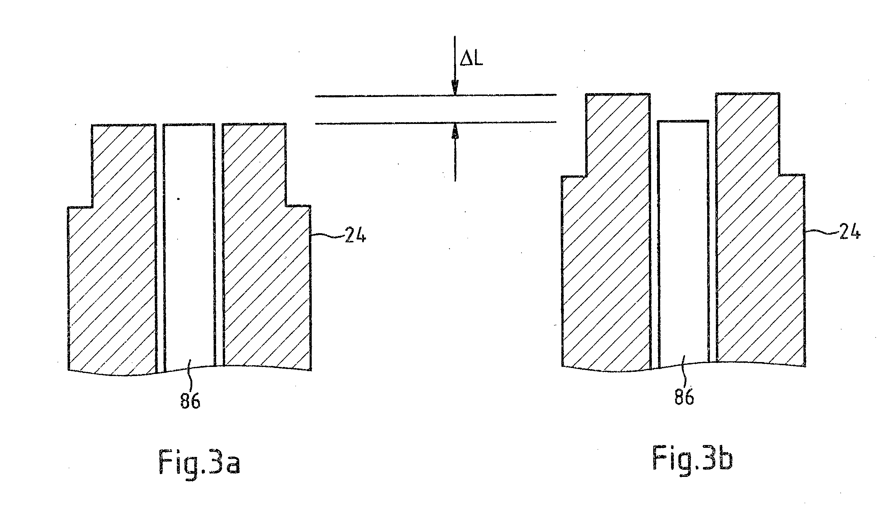

Die Fig. 3a und 3b zeigen einen zu der Messeinrichtung 38 in Fig. 2 weisenden Abschnitt des Spannbolzens 24 mit dem Innenstift 86 in unterschiedlichen Dehnungszuständen. Der Spannbolzen 24 in der Fig. 3a ist unbelastet. Die Fig. 3b zeigt den Spannbolzen 24 in einem Dehnungszustand.

Mit der Messeinrichtung 38 kann der Längenunterschied $\Delta L$ zwischen der Länge $L_{24}$ des Spannbolzens 24 und der Länge $L_{86}$ des Innenstifts 86 präzise erfasst werden. Die Messeinrichtung 38 ist als Messuhr ausgebildet. Die Messeinrichtung 38 hat eine Bajonett-Kupplung 90. Die Bajonett-Kupplung 90 ist mit einem Anschlussstück 92 in Eingriff, das auf das Außengewinde 60 in dem Abschnitt 59 des Spannbolzens 24 aufgeschraubt ist. In der Messeinrichtung 38 gibt es einen Messfühler 94. Der Messfühler 94 ist mit der Kraft einer Schraubenfeder 97 gegen das der Messeinrichtung 38 zugewandte Ende 96 des Innenstifts 86 in dem Spannbolzen 24 gedrückt.

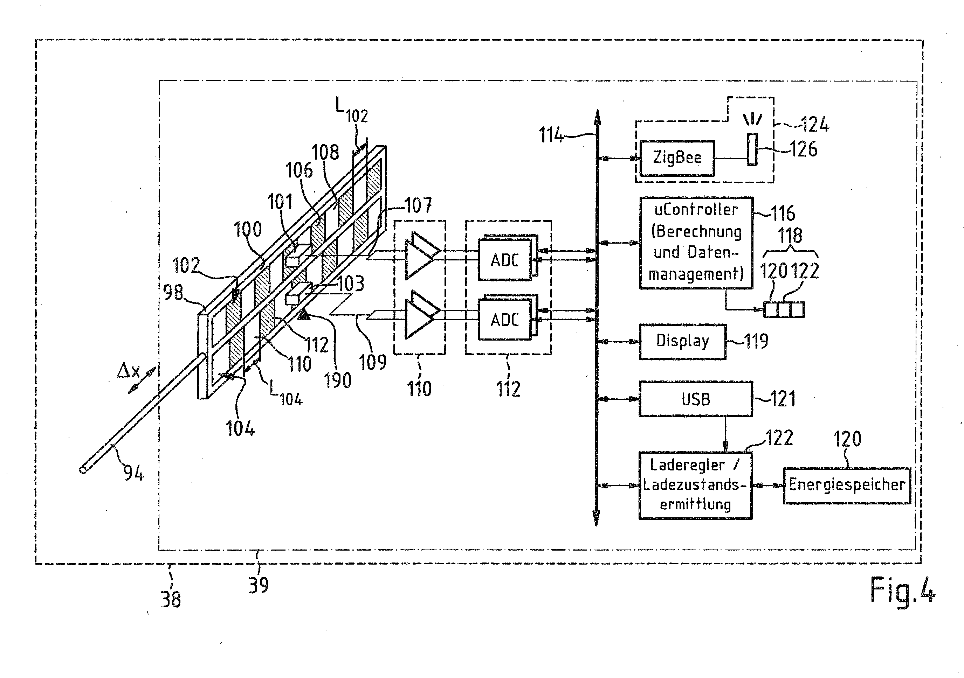

Die Fig. 4 zeigt den Aufbau der Messeinrichtung 38. Die Messeinrichtung 38 hat einen Träger 39. In dem Träger 39 ist der Messfühler 94 gelagert. Der Träger 39 hält ein verlagerbares Trägerelement 98. Das Trägerelement 98 ist in einem Lager 190 an dem Träger 39 aufgenommen. Der Messfühler 94 und das Trägerelement 98 sind bewegungsgekoppelt. Der Messfühler 94 ist in dem vorliegenden Fall hierzu mit dem Trägerelement 98 mechanisch verbunden. Das Trägerelement 98 ist mit magnetisiertem Kunststoffmaterial 100 beschichtet. In dem Kunststoffmaterial sind zwei Skalenstreifen 102, 104 ausgebildet. In dem Skalenstreifen 102 gibt es eine Skala mit aufeinanderfolgenden Zonen 106, 108, deren Breite $L_{102}$ exakt gleich ist, die jedoch eine abwechselnd unterschiedliche Magnetisierung haben.

Die Skala in dem Skalenstreifen 104 ist mit aufeinanderfolgenden Zonen 110, 112 ausgeführt, deren Breite $L_{104}$ konstant ist, die aber ebenfalls eine Magnetisierung haben. Die Zonen in dem Skalenstreifen 104 bilden eine Noniusskala zu den Zonen in dem Skalenstreifen 102. D.h. es gilt:

$$10 \times L_{102} = 9 \times L_{104}$$

Bei einer Relativbewegung von Innenstift 86 und Spannbolzen 24 in der Messeinrichtung 38 wird der Messfühler 94 und damit das Trägerelement 98 in der Messeinrichtung 38 mit den Skalenstreifen 102, 104 verlagert.

Für das Erfassen der Bewegung des Trägerelements 98 gibt es in der Messeinrichtung 38 einen Ma-gnetisierungssensor 101 und einen Magnetisierungs-sensor 103. Die Magnetisierungssensoren 101, 103 sind in der Messeinrichtung 38 ortsfest positioniert. Mittels der Magnetisierungssensoren 101, 103 kann die Magnetisierung des Kunststoffmaterials 100 am Ort der Sensoren an dem beweglichen Trägerelement 98 lokal erfasst werden. Die Magnetisierungssensoren 101, 103 erzeugen jeweils ein analoges Spannungssignal, das der lokalen Magnetisierung des Kunststoffmaterials 100 in den beiden Skalenstreifen 102, 104 entspricht. In der Messeinrichtung 38 werden diese Spannungssignale über elektrische Leitungen 107, 109 einer Verstärkerstufe 110 zugeführt. Die Verstärkungsstufe 110 verstärkt die Spannungssignale und gibt sie auf eine über eine Wandlereinheit 112. Von dieser Wandlungseinheit 112 werden sie in Form von digitalen Datensignalen auf einem Datenbus 114 zur Verfügung gestellt.

Die elektrischen Leitungen 107, 109, die Verstärkungsstufe 110 und die Wandlereinheit 112 sowie der Datenbus 114 sind elektrische Bauelemente, die an dem Träger 39 aufgenommen sind.

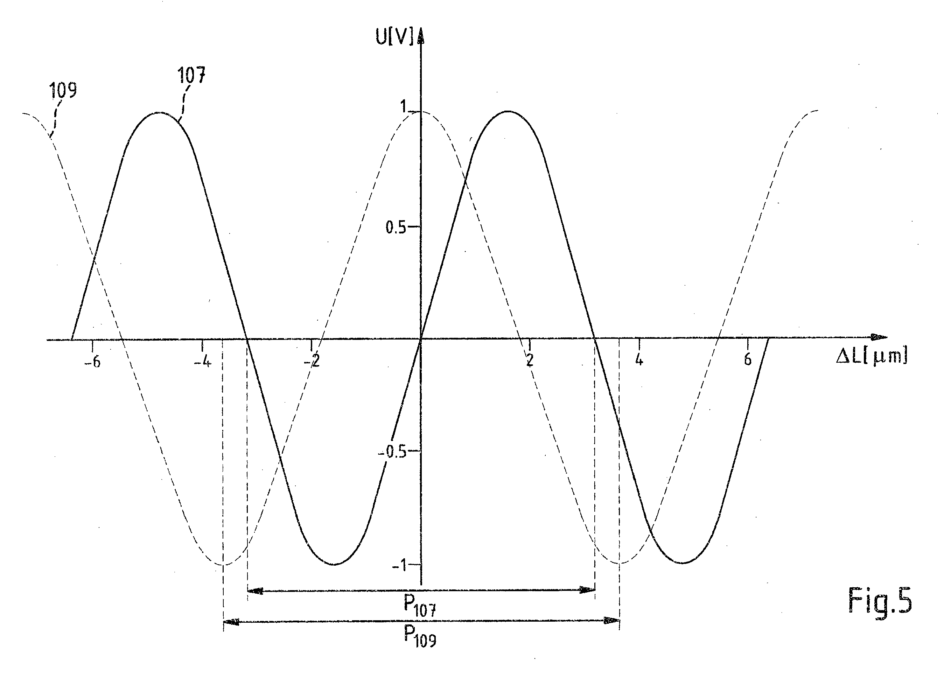

Die Fig. 5 zeigt das Spannungssignal 107 des Magnetisierungssensors 103 und das Spannungssignal 109 des Magnetisierungssensors 101 als Funktion der Dehnung ∆L des Spannbolzens 24. Die Spannungssignale 107, 109 sind zueinander phasenverschoben. Weil dem Spannungssignal 109 die Noniusskala auf dem Skalenstreifen 104 zugrunde liegt und das Spannungssignal 107 auf dem hiervon verschiedenen Skalenstreifen 102 basiert, ist die Periode $P_{107}$ des Spannungssignals 107 etwas kleiner als die Periode $P_{109}$ des Spannungssignals 109.

Die in der Fig. 4 gezeigte Messeinrichtung 38 wird mittels eines Mikrokontrollers 116 gesteuert. Der Mikrokontroller 116 ist ebenfalls an dem Träger 39 aufgenommen und an den Datenbus 114 angeschlossen. Er steuert eine LED-Baugruppe 118 mit einer roten LED 120 und einer grünen LED 122. Die Messeinrichtung 38 an dem Träger 39 hat ein Display 119 und enthält einen Energiespeicher 120 mit einem Laderegler 122.

Der Mikrokontroller 116 berechnet aus den auf dem Datenbus 114 bereitgestellten Daten der Wandlereinheit 112 die Dehnung des Spannbolzens 24. Er bringt die ermittelte Dehnung des Spannbolzens 24 an dem Display 119 zur Anzeige und übermittelt diese Dehnung an den Steuerrechner 40. Dieser Steuerrechner 40 prüft, ob der ermittelte Istwert für die Dehnung des Spannbolzens 24 ober- oder unterhalb des einstellbaren Sollwerts S innerhalb oder außerhalb eines einstellbaren Toleranzintervalls liegt.

Sollwert S und Toleranzintervall sind im Speicher des Steuerrechners 40 abgelegt. Abhängig vom Ergebnis dieser Prüfung wird dem Mikrokontroller 116 ein entsprechender Befehl zur Ansteuerung der LED-Baugruppe 118 übermittelt.

Alternativ hierzu ist es auch möglich, dass der Mikrokontroller 116 den ermittelten Istwert für die Dehnung des Spannbolzens 24 mit einem einstellbaren Sollwert vergleicht, der in einem Speicher des Mikrokontrollers 116 abgelegt ist.

Befindet sich der Istwert innerhalb eines vorgebbaren Toleranzintervalls I, um den Sollwert S, wird mittels des Mikrokontrollers 116 die grüne LED 122 eingeschaltet. Wenn die ermittelte Dehnung für den Spannbolzen 24 außerhalb des Toleranzintervalls I um den Schwellwert S liegt, wird die rote LED 120 mit dem Mikrokontroller 116 angesteuert.

Die grüne LED 122 der Messeinrichtung 38 wird z.B. aktiviert, wenn eine Längung ∆L des Spannbolzens 24 erfasst wird, die einem vorgegebenen Wert für eine gewünschte Spannkraft entspricht, mit welcher das Flanschteil 20 gegen das Flanschteil 14 der Flanschverbindung 12 gedrückt wird. Liegt dagegen die mittels der Messeinrichtung 38 erfasste Längung ∆L eines Spann-bolzens 24 außerhalb eines solchen günstigen Wertes, wird die rote LED 120 zur Anzeige gebracht. Auf diese Weise wird es einer Bedienperson ermöglicht, schnell zu erkennen, ob ein an der Flanschverbindung 12 eingesetzter Spannbolzen 24 fehlerhaft ist oder etwa aufgrund von Verkantungen in einer ungünstigen Wirkrichtung mit Spannkraft beaufschlagt wird.

Für die drahtlose Datenkommunikation mit dem Steuerrechner 40 über die Sende- und Empfangseinheit 42 ist an dem Träger 39 der Messeinrichtung 38 eine Funknetz-Baugruppe 124 mit einer Antenne 126 aufgenommen. Die Funknetz-Baugruppe 124 ermöglicht das Übertragen von Messinformation zu dem Steuerrechner 40 auf unterschiedlichen Übertragungskanälen. Dies bewirkt, dass die mit dem Steuerrechner 40 erfasste Messinformation von einer Vielzahl von Spannmodulen 28 jeweils einem bestimmten Spannmodul 28 zugeordnet werden kann. Alternativ hierzu ist es möglich, die Funknetz-Baugruppe 124 so auszubilden, dass die in der Messeinrichtung 38 erfasste Messinformation für ein jedes Spannmodul 28 in unterschiedlichen Zeitfenstern an den Steuerrechner 40 übertragen wird.

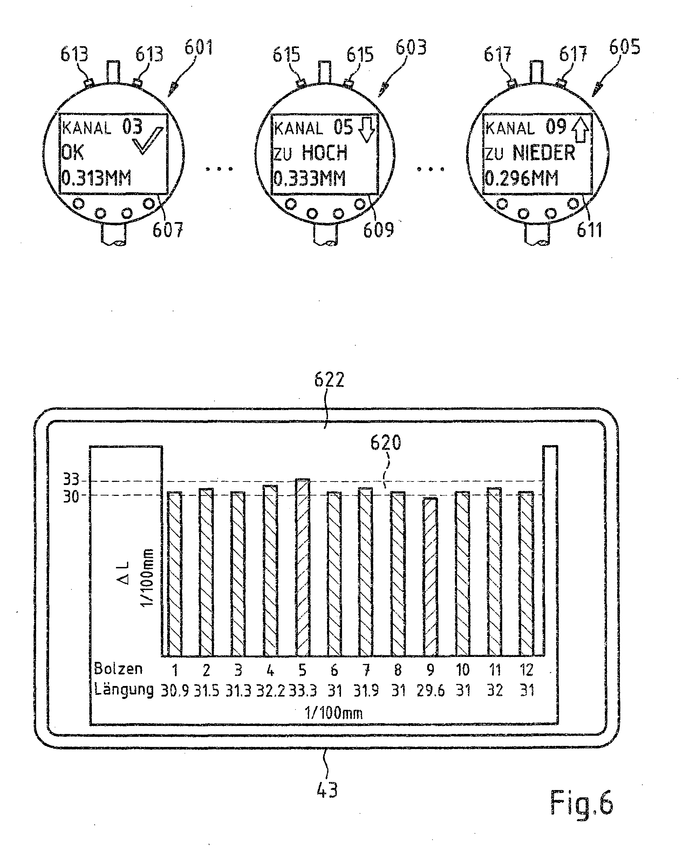

Die Fig. 6 zeigt die Messeinrichtungen 601, 603, 605 eines dritten, fünften und neunten Spannmoduls in der Vorrichtung 10 aus Fig. 1 mit der Anzeige des Monitors 43. Die Messeinrichtung 601 erfasst die in einem Toleranzintervall bzw. Streuband 620 liegende Dehnung ΔL eines Spannbolzens 24 in der Flanschverbindung 12 aus Fig. 1. Demgegenüber werden mit den Messeinrichtungen 603, 605 entsprechende Dehnungen von Spannbolzen 24 erfasst, die außerhalb des vorgebbaren Streuband 620 liegen.

Dabei ermöglichen die Displayanzeigen 607, 609, 611 der Messeinrichtungen 601, 603, 605 und die Leichtdioden 613, 615, 617 einer Kontrollperson ein übersichtliches Überwachen des Dehnungszustands der Spannbolzen 24 in der Flanschverbindung 12. An dem Monitor 43 kann der Dehnungszustand aller Spannbolzen der Flanschverbindung 12 aus Fig. 1 mit dem Streuband 620 an einer Bildschirmanzeige 622 visualisiert werden. Eine Montageperson kann so aufgrund der Anzeige an dem Monitor 43 sofort sehen, welches Spannorgan für das Verspannen der Flanschverbindung gegebenenfalls noch zusätzlich verspannt werden muss, welches Spannorgan unter Umständen defekt ist und bei welchem Spannorgan die Spannung verringert werden muss.

Abschließend sind insbesondere folgende bevorzugte Merkmale festzuhalten: Die Erfindung betrifft insbesondere eine Vorrichtung 10 für das kontrollierte Verspannen eines ersten Teils 14 mit einem dem ersten Teil 14 gegenüberliegenden zweiten Teil 20 einer Flanschverbindung 12. Die Vorrichtung 10 hat wenigstens ein Spannmodul 28. Das wenigstens eine Spannmodul 28 hat ein an dem zweiten Teil 20 abstützbares Mittel 66, 70 für das Erzeugen einer Zugkraft. Das abstützbare Mittel 66, 70 ist an ein an dem ersten Teil 14 der Flanschverbindung verankertes, durch das zweite Teil 20 der Flanschverbindung 12 hindurchgreifendes Spannorgan 24 anschließbar. Das Spannmodul 28 enthält eine Messeinrichtung 38 für das Erfassen einer beim Verspannen hervorgerufenen Längenänderung ΔL eines Spannorgans 24. In der Messeinrichtung 38 gibt es eine elektronische Baugruppe 124 für das drahtlose Übermitteln von Messinformation an einen Signalempfänger 42.

## Patentansprüche

1. Messeinrichtung (38) mit einem an einem Träger (39) aufgenommenen Sensor (101, 103) für das Erfassen einer beim Verspannen hervorgerufenen Längenänderung (ΔL) eines an einem ersten Teil (14) einer Flanschverbindung (12) verankerten und durch ein zweites Teil (20) der Flanschverbindung (12) hindurchgreifenden Spannorgans (24) wobei über wenigstens ein an dem Träger (39) aufgenommenes elektrisches Bauelement (100, 110, 112, 114) der Sensor (101, 103) mit einer an dem Träger (39) aufgenommenen elektronischen Baugruppe (124) für das drahtlose Übermitteln von Messinformation an einen Signalempfänger (42) elektrisch verbunden ist, **dadurch gekennzeichnet, dass** *der Träger (39) eine Anzeigeeinheit (118) und einen mit der Anzeigeeinheit (118) verbundenen Signalschaltkreis (116) trägt, der bei Erfassen einer günstigen und/oder ungünstigen Längung (ΔL) des Spannorgans (24) ein optisches und/oder akustisches Anzeigesignal abgibt.*

2. Messeinrichtung (38) mit einem an einem Träger (39) aufgenommenen Sensor (101, 103) für das Erfassen einer beim Verspannen hervorgerufenen Längenänderung (ΔL) eines an einem ersten Teil (14) einer Flanschverbindung (12) verankerten und durch ein zweites Teil (20) der Flanschverbindung (12) hindurchgreifenden Spannorgans (24) wobei

   über wenigstens ein an dem Träger (39) aufgenommenes elektrisches Bauelement (100, 110, 112, 114) der Sensor (101, 103) mit einer an dem Träger (39) aufgenommenen elektronischen Baugruppe (124) für das drahtlose Übermitteln von Messinformation an einen Signalempfänger (42) elektrisch verbunden ist,
   **dadurch gekennzeichnet, dass**
   *der an dem Träger (39) aufgenommene Sensor ein Magnetisierungssensor (101, 103) ist und an dem Träger (39) ein bewegbarer Messfühler (94) aufgenommen ist, der mit einem im vorderen Spannorgan (24) festgelegten Messstift (86) derart in Kontakt gebracht werden kann, dass der Messfühler (94) bei einem Verspannen des Spannorgans (24) relativ zu dem Träger (39) verlagert wird, wobei der Messfühler (94) mit einem Trägerelement (98) bewegungsgekoppelt ist, das Magnetisierungsmaterial (100) aufweist, in dem Zonen (106, 108) mit unterschiedlicher Magnetisierung ausgebildet sind, die relativ zu dem Magnetisierungssensor (101, 103) verlagerbar sind, um durch Ermitteln einer lokalen Magnetisierung des Magnetisierungsmaterials (100) eine Längenänderung (ΔL) des Spannorgans (24) zu erfassen.*

3. Messeinrichtung nach Anspruch 2, **dadurch ge-**

**kennzeichnet, dass** an dem Trägerelement (98) ein erster Skalenstreifen (102) mit aufeinanderfolgenden Zonen (106, 108) einer ersten konstanten Länge ($L_{102}$) und abwechselnd unterschiedlicher Magnetisierung sowie ein zweiter Skalenstreifen (104) mit aufeinanderfolgenden Zonen (110, 112) einer zweiten konstanten Länge ($L_{104}$) und abwechselnd unterschiedlicher Magnetisierung ausgebildet ist, wobei die erste konstante Länge ($L_{102}$) von der zweiten konstanten Länge ($L_{104}$) verschieden ist, und wobei vorzugsweise das 10-fache der ersten konstanten Länge ($L_{102}$) dem 9-fachen der zweiten konstanten Länge ($L_{104}$) entspricht.

4. Messeinrichtung nach einem der Ansprüche 1 bis 3, **dadurch gekennzeichnet, dass** die elektronische Baugruppe (124) für drahtlose bidirektionale Kommunikation mit einem Steuerrechner (40) ausgelegt ist.

5. Messeinrichtung nach einem der Ansprüche Anspruch 1 bis 4, **dadurch gekennzeichnet, dass** der Träger (39) eine Anzeigeeinheit (118) und einen mit der Anzeigeeinheit (118) verbundenen Signalschaltkreis (116) trägt, der bei Erfassen einer günstigen und/oder ungünstigen Längung ($\Delta L$) des Spannorgans (24) ein optisches und/oder akustisches Anzeigesignal abgibt.

6. Messeinrichtung nach Anspruch 5, **dadurch gekennzeichnet, dass** die Anzeigeeinheit (118) wenigstens eine Leuchtdiode (120, 122) und/oder ein Display aufweist.

7. Spannmodul (28) für das kontrollierte Verspannen eines ersten Teils (14) mit einem dem ersten Teil (14) gegenüberliegenden zweiten Teil (20) einer Flanschverbindung (12), das eine nach einem der Ansprüche 1 bis 6 ausgebildete Messeinrichtung enthält und das ein an der Flanschverbindung (12) abstützbares Mittel (66) mit einem Fenster (81) hat, durch das eine mit einem Gewinde an dem Spannorgan (24) aufgenommene Mutter (58) mit einem durch das Fenster (82) hindurchgreifenden Verstellmittel bewegt werden kann.

8. Spannmodul nach Anspruch 7, **dadurch gekennzeichnet, dass** das durch das Fenster (81) hindurchgreifende Verstellmittel ein an dem abstützbaren Mittel (66) drehbar gelagertes Getriebemittel (80) ist.

9. Vorrichtung für das Überwachen und/oder kontrollierte Verspannen eines ersten Teils (14) mit einem dem ersten Teil gegenüberliegenden zweiten Teil (20) einer Flanschverbindung (12) durch Beaufschlagen von mehreren an dem ersten Teil (14) der Flanschverbindung (12) verankerter und durch das zweite Teil (20) der Flanschverbindung (12) hindurchgreifender Spannorgane (24) mit Zugkraft, **dadurch gekennzeichnet, dass** für das Erfassen der beim Verspannen hervorgerufenen Längenänderung der Spannorgane (24) mehrere Messeinrichtungen (38) gemäß einem der Ansprüche 1 bis 6 vorgesehen sind.

10. Vorrichtung nach Anspruch 9, **dadurch gekennzeichnet, dass** für das gleichzeitige Beaufschlagen der mehreren an dem ersten Teil (14) der Flanschverbindung (12) verankerten und durch das zweite Teil (20) der Flanschverbindung (12) hindurchgreifenden Spannorgane (24) mit Zugkraft mehrere Spannmodule nach Anspruch 7 oder Anspruch 8 vorgesehen sind.

11. Vorrichtung nach Anspruch 9 oder 10, **dadurch gekennzeichnet, dass** die elektronische Baugruppen (124) der Messeinrichtung (38) für das Übermitteln von Messinformation auf unterschiedlichen Übertragungskanälen oder in unterschiedlichen Zeitfenstern an den Signal-empfänger (42) ausgelegt sind.

12. Vorrichtung nach einem der Ansprüche 9 bis 11, **dadurch gekennzeichnet, dass** die Mittel für das Erzeugen einer Zugkraft an eine gemeinsame Versorgungsleitung (74) für Hydraulikfluid angeschlossene Hydraulikmittel (66, 70, 76) sind.

13. Vorrichtung nach Anspruch 12, **dadurch gekennzeichnet, dass** die Spannmodule (28) an einem ringförmigen Träger (30) festgelegt sind, in dem die Versorgungsleitung (74) für das Hydraulikfluid geführt ist.

14. Vorrichtung nach Anspruch 13, **dadurch gekennzeichnet, dass** der ringförmige Träger (30) aus mehreren Ringsegmenten (29, 31, 33) zusammengesetzt ist.

15. Vorrichtung nach einem der Ansprüche 1 bis 14, **dadurch gekennzeichnet, dass** ein Signalempfänger (42) für das Erfassen und Weiterleiten von Messinformation aus den Messeinrichtungen (38) an eine Rechnereinheit (40) und/oder eine mit einer Rechnereinheit (40) verbundene Sendeeinheit (42) für das Steuern der Messeinrichtung (38) vorgesehen ist.

16. Vorrichtung nach Anspruch 15, **dadurch gekennzeichnet, dass** die Rechnereinheit (40) prüft, ob ein ermittelter Istwert für die Dehnung eines Spannorgans (24) ober- oder unterhalb eines einstellbaren und in einem Speicher der Rechnereinheit (40) veränderbar abgelegten Sollwerts S innerhalb oder außerhalb eines in den Speicher der Rechnereinheit (40) veränderbar abgelegten Toleranzintervalls liegt.

**17.** Verfahren zum kontrollierten Verspannen einer Flanschverbindung (12) mittels mehrerer, an einem ersten Teil (14) der Flanschverbindung verankerter und durch ein zweites Teil (20) der Flanschverbindung (12) hindurchgreifender Spannorgane (24) mit einer Vorrichtung (10) gemäß einer der Ansprüche 9 bis 16, bei dem ein jedes Spannorgan (24) gleichzeitig mit einer Zugkraft beaufschlagt wird, bei dem die durch das Verspannen hervorgerufene Längenänderung ($\Delta L$) eines jeden Spannorgans (24) erfasst wird, bei dem die erfasste Längenänderung ($\Delta L$) eines jeden Spannorgans (24) drahtlos an eine gemeinsame Anzeigeeinheit (43) übermittelt wird, und bei dem die erfasste Längenänderung ($\Delta L$) eines jeden Spannorgans (24) gleichzeitig zur Anzeige gebracht wird und/oder bei dem die Abweichung der erfassten Längenänderung ($\Delta L$) eines jeden Spannorgans (24) von einem vorgegebenen Wert zur Anzeige gebracht wird.

**Claims**

**1.** Measurement device (38) having a sensor (101, 103), which is held on a support (39), for detecting a change ($\Delta L$) in length, which is caused in the event of tensioning, in a tensioning element (24) which is anchored to a first part (14) of a flange connection (12) and passes through a second part (20) of the flange connection (12), wherein the sensor (101, 103) is electrically connected to an electronic assembly (124), which is held on the support (39), for the wireless transmission of measurement information to a signal receiver (42) by means of at least one electrical component (100, 110, 112, 114) which is held on the support (39), **characterized in that** the support (39) is fitted with an indicator unit (118) and a signal circuit (116) which is connected to the indicator unit (118) and outputs an optical and/or acoustic indicator signal when a favourable and/or unfavourable extension ($\Delta L$) in the tensioning element (24) is detected.

**2.** Measurement device (38) having a sensor (101, 103), which is held on a support (39), for detecting a change ($\Delta L$) in length, which is caused in the event of tensioning, in a tensioning element (24) which is anchored to a first part (14) of a flange connection (12) and passes through a second part (20) of the flange connection (12), wherein the sensor (101, 103) is electrically connected to an electronic assembly (124), which is held on the support (39), for the wireless transmission of measurement information to a signal receiver (42) by means of at least one electrical component (100, 110, 112, 114) which is held on the support (39), **characterized in that** the sensor, which is held on the support (39), is a magnetization sensor (101, 103), and a movable measurement sensor (94) is held on the support (39), it being possible for said measurement sensor to be moved into contact with a measurement pin (86), which is secured in the front tensioning element (24), in such a way that the measurement sensor (94) is displaced relative to the support (39) when the tensioning element (24) is tensioned, wherein the measurement sensor (94) is coupled in respect of movement to a support element (98) which comprises magnetization material (100) in which zones (106, 108) of different magnetization are formed, it being possible for said zones to be displaced relative to the magnetization sensor (101, 103) in order to detect a change ($\Delta L$) in length of the tensioning element (24) by determining a local magnetization of the magnetization material (100).

**3.** Measurement device according to Claim 2, **characterized in that** a first scale strip (102) with successive zones (106, 108) of a first constant length ($L_{102}$) and alternately different magnetization and also a second scale strip (104) with successive zones (110, 112) of a second constant length ($L_{104}$) and alternately different magnetization are formed on the support element (98), wherein the first constant length ($L_{102}$) is different from the second constant length ($L_{104}$), and wherein 10 times the first constant length ($L_{102}$) preferably corresponds to 9 times the second constant length ($L_{104}$).

**4.** Measurement device according to one of Claims 1 to 3, **characterized in that** the electronic assembly (124) is designed for wireless bidirectional communication with a control computer (40).

**5.** Measurement device according to one of Claims 1 to 4, **characterized in that** the support (39) is fitted with an indicator unit (118) and a signal circuit (116) which is connected to the indicator unit (118) and outputs an optical and/or acoustic indicator signal when a favourable and/or unfavourable extension ($\Delta L$) of the tensioning element (24) is detected.

**6.** Measurement device according to Claim 5, **characterized in that** the indicator unit (118) has at least one light-emitting diode (120, 122) and/or a display.

**7.** Tensioning module (28) for the controlled tensioning of a first part (14) with a second part (20), which is situated opposite the first part (14), of a flange connection (12), which tensioning module contains a measurement device which is designed in accordance with one of Claims 1 to 6 and which tensioning module has a means (66), which can be supported on the flange connection (12), with a window (81) through which a nut (58) which is held on the tensioning element (24) by a thread can be moved by an adjustment means which can pass through the window (82).

8. Tensioning module according to Claim 7, **characterized in that** the adjustment means which passes through the window (81) is a transmission means (80) which is rotatably mounted on the means (66) which can be supported.

9. Apparatus for the monitoring and/or controlled tensioning of a first part (14) with a second part (20), which is situated opposite the first part, of a flange connection (12) by applying tensile force to a plurality of tensioning elements (24) which are anchored on the first part (14) of the flange connection (12) and pass through the second part (20) of the flange connection (12), **characterized in that** a plurality of measurement devices (38) according to one of Claims 1 to 6 are provided for detecting the change in length, which is caused in the event of tensioning, of the tensioning elements (24).

10. Apparatus according to Claim 9, **characterized in that** a plurality of tensioning modules according to Claim 7 or Claim 8 are provided for simultaneously applying tensile force to the plurality of tensioning elements (24) which are anchored on the first part (14) of the flange connection (12) and pass through the second part (20) of the flange connection (12).

11. Apparatus according to Claim 9 or 10, **characterized in that** the electronic assemblies (124) of the measurement device (38) are designed for transmitting measurement information to the signal receiver (42) on different transmission channels or in different time windows.

12. Apparatus according to one of Claims 9 to 11, **characterized in that** the means for generating a tensile force are hydraulic means (66, 70, 76) which are connected to a common supply line (74) for hydraulic fluid.

13. Apparatus according to Claim 12, **characterized in that** the tensioning modules (28) are secured on an annular support (30) in which the supply line (74) for the hydraulic fluid is routed.

14. Apparatus according to Claim 13, **characterized in that** the annular support (30) is composed of a plurality of ring segments (29, 31, 33).

15. Apparatus according to one of Claims 1 to 14, **characterized in that** a signal receiver (42) for detecting and forwarding measurement information from the measurement devices (38) to a computer unit (40) and/or a transmission unit (42), which is connected to a computer unit (40), for controlling the measurement device (38) is provided.

16. Apparatus according to Claim 15, **characterized in that** the computer unit (40) checks whether a determined actual value for the expansion of a tensioning element (24) above or below an adjustable setpoint value S which is stored in a modifiable manner in a memory of the computer unit (40) lies within or outside a tolerance interval which is stored in a modifiable manner in the memory of the computer unit (40).

17. Method for the controlled tensioning of a flange connection (12) by means of a plurality of tensioning elements (24) which are anchored to a first part (14) of the flange connection and pass through a second part (20) of the flange connection (12) using an apparatus (10) according to one of Claims 9 to 16, in which method tensile force is simultaneously applied to each tensioning element (24), in which method the change (ΔL) in length, which is caused by the tensioning, of each tensioning element (24) is detected, in which method the detected change (ΔL) in length of each tensioning element (24) is wirelessly transmitted to a common display unit (43), and in which method the detected change (ΔL) in length of each tensioning element (24) is simultaneously displayed and/or in which method the deviation in the detected change (ΔL) in length of each tensioning element (24) from a prespecified value is displayed.

**Revendications**

1. Dispositif de mesure (38) présentant un capteur (101, 103) repris sur un support (39) et permettant de détecter une modification de longueur (ΔL), provoquée par le serrage, d'un organe de serrage (24) ancré sur une première partie (14) d'une liaison (12) par bride et traversant une deuxième partie (20) de la liaison (12) à bride,
le capteur (101, 103) étant raccordé électriquement à un module électronique (124) repris sur le support (39) et permettant la transmission sans fil d'informations de mesure à un récepteur (42), par l'intermédiaire d'au moins un composant électrique (100, 110, 112, 114) repris sur le support (39), **caractérisé en ce que**
le support (39) porte une unité d'affichage (118) et un circuit de signalisation (116) raccordé à l'unité d'affichage (118) et qui délivre un signal d'affichage optique et/ou acoustique lors de la détection d'un allongement (ΔL) favorable et/ou défavorable de l'organe de serrage (24).

2. Dispositif de mesure (38) présentant un capteur (101, 103) repris sur un support (39) et permettant de détecter une modification de longueur (ΔL), provoquée par le serrage, d'un organe de serrage (24) ancré sur une première partie (14) d'une liaison (12) par bride et traversant une deuxième partie (20) de la liaison (12) à bride,

le capteur (101, 103) étant raccordé électriquement à un module électronique (124) repris sur le support (39) et permettant la transmission sans fil d'informations de mesure à un récepteur (42), par l'intermédiaire d'au moins un composant électrique (100, 110, 112, 114) repris sur le support (39), **caractérisé en ce que**

le capteur repris sur le support (39) est un capteur de magnétisation (101, 103),

**en ce qu'**une sonde mobile de mesure (94) est reprise sur le support (39) et peut être mise en contact avec une tige de mesure (86) fixée dans l'organe avant de serrage (24) de telle sorte que la sonde de mesure (94) soit déplacée par rapport au support (39) lorsque l'organe de serrage (24) est contraint, **en ce que** la sonde de mesure (94) est couplée à déplacement à un élément de support (98) qui présente un matériau de magnétisation (100) dans lequel des zones (106, 108) de magnétisation différentes sont formées et peuvent être déplacées par rapport au capteur de magnétisation (101, 103) pour détecter une modification de longueur (ΔL) de l'organe de serrage (24) par détermination de la magnétisation locale du matériau de magnétisation (100).

3.  Dispositif de mesure selon la revendication 2, **caractérisé en ce qu'**un premier ruban d'échelle (102) qui présente des zones (106, 108) successives d'une première longueur ($L_{102}$) constante et en alternance de magnétisations différentes ainsi qu'un deuxième ruban d'échelle (104) doté de zones (110, 112) successives d'une deuxième longueur constante ($L_{104}$) et en alternance de magnétisations différentes sont formés sur l'élément de support (98), la première longueur constante ($L_{102}$) étant différente de la deuxième longueur constante ($L_{104}$), la première longueur constante ($L_{102}$) multipliée par 10 correspondant de préférence à la deuxième longueur constante ($L_{104}$) multipliée par 9.

4.  Dispositif de mesure selon l'une des revendications 1 à 3, **caractérisé en ce que** le module électronique (124) est conçu pour permettre une communication sans fil bidirectionnelle avec un calculateur de commande (40).

5.  Dispositif de mesure selon l'une des revendications 1 à 4, **caractérisé en ce que** le support (39) porte une unité d'affichage (118) et un circuit de signalisation (116) raccordé à l'unité d'affichage (118) et qui délivre un signal d'affichage optique et/ou acoustique lors de la détection d'un allongement (ΔL) favorable ou défavorable de l'organe de serrage (24).

6.  Dispositif de mesure selon la revendication 5, **caractérisé en ce que** l'unité d'affichage (118) présente au moins une diode luminescente (120, 122) et/ou un écran d'affichage.

7.  Module de serrage (28) permettant le serrage contrôlé d'une première pièce (14) sur une deuxième pièce (20), opposée à la première pièce (14), d'une liaison (12) à bride, le module de serrage présentant un dispositif de mesure configuré selon l'une des revendications 1 à 6 et un moyen (66) apte à s'appuyer sur la liaison (12) à bride et doté d'une fenêtre (81) par laquelle un écrou (58) repris sur l'organe de serrage (24) à l'aide d'un filet peut être déplacé par un moyen d'ajustement qui traverse la fenêtre (82).

8.  Dispositif de mesure selon la revendication 7, **caractérisé en ce que** le moyen d'ajustement qui traverse la fenêtre (81) est un moyen de transmission (80) monté à rotation sur le moyen (66) apte à être soutenu.

9.  Dispositif de surveillance et/ou de serrage contrôlé d'une première partie (14) sur une deuxième partie (20), opposée à la première partie, d'une liaison (12) à bride, par application d'une force de traction sur plusieurs organes de serrage (24) ancrés sur la première partie (14) de la liaison (12) à bride et traversant la deuxième partie (20) de la liaison (12) à bride, **caractérisé en ce que** plusieurs dispositifs de mesure (38) selon l'une des revendications 1 à 6 sont prévus pour saisir la modification de longueur des organes de serrage (24) provoquée par le serrage.

10.  Dispositif selon la revendication 9, **caractérisé en ce que** plusieurs modules de serrage selon la revendication 7 ou la revendication 8 sont prévus pour appliquer simultanément une force de traction sur les différents organes de serrage (24) ancrés sur la première partie (14) de la liaison (12) à bride et traversant la deuxième partie (20) de la liaison (12) à bride.

11.  Dispositif selon les revendications 9 ou 10, **caractérisé en ce que** les modules électroniques (124) du dispositif de mesure (38) sont conçus pour transmettre des informations de mesure sur différents canaux de transfert ou dans différentes fenêtres temporelles au récepteur (42) de signaux.

12.  Dispositif selon l'une des revendications 9 à 11, **caractérisé en ce que** les moyens exerçant une force de traction sont des moyens hydrauliques (66, 70, 76) raccordés à un conduit commun (74) d'alimentation en fluide hydraulique.

13.  Dispositif selon la revendication 12, **caractérisé en ce que** les modules de serrage (28) sont fixés sur un support annulaire (30) dans lequel passe le conduit (74) d'alimentation en fluide hydraulique.

**14.** Dispositif selon la revendication 13, **caractérisé en ce que** le support annulaire (30) est constitué de l'assemblage de plusieurs segments annulaires (29, 31, 33).

**15.** Dispositif selon l'une des revendications 1 à 14, **caractérisé en ce qu'**un récepteur (42) de signaux est prévu pour saisir et transmettre des informations de mesure provenant du dispositif de mesure (38) à une unité de calcul (40) et/ou **en ce qu'**une unité d'émission (42) reliée à une unité de calcul (40) est prévue pour la commande du dispositif de mesure (38).

**16.** Dispositif selon la revendication 15, **caractérisé en ce que** l'unité de calcul (40) vérifie si une valeur effective déterminée de l'allongement d'un organe de serrage (24) est située au-dessus ou en dessous d'une valeur de consigne S ajustable, modifiable et apte à être conservée dans une mémoire de l'unité de calcul (40), au-dessus ou en dessous d'un intervalle de tolérance modifiable conservé dans la mémoire de l'unité de calcul (40).

**17.** Procédé de serrage contrôlé d'une liaison (12) à bride au moyen de plusieurs organes de serrage (24) ancrée sur une première partie (14) de la liaison à bride et traversant une deuxième partie (20) de la liaison (12) à bride, à l'aide d'un dispositif (10) selon l'une des revendications 9 à 16, et dans lequel une force de traction est appliquée simultanément sur chaque organe de serrage (24), la modification de longueur ($\Delta L$) provoquée par le serrage de chaque organe de serrage (24) est saisie, la modification de longueur ($\Delta L$) saisie de chaque organe de serrage (24) est transmise sans fil à une unité commune d'affichage (43) et des modifications de longueur ($\Delta L$) saisies de chaque organe de serrage (24) sont affichées simultanément et/ou l'écart entre les modifications de longueur ($\Delta L$) saisies de chaque organe de serrage (24) par rapport à une valeur prédéterminée est affiché.

Fig.1

EP 2 522 465 B1

Fig.2

Fig.3b

Fig.3a

Fig. 4

Fig.5

EP 2 522 465 B1

613   613   601          615   615   603          617   617   605

KANAL 03 ✓          KANAL 05 ⇩          KANAL 09 ⇧

OK                  ZU HOCH             ZU NIEDER

0.313MM             0.333MM             0.296MM

607          609          611

·  ·  ·          ·  ·  ·

622

620

| Bolzen | 1 | 2 | 3 | 4 | 5 | 6 | 7 | 8 | 9 | 10 | 11 | 12 |
|---|---|---|---|---|---|---|---|---|---|---|---|---|
| Längung | 30.9 | 31.5 | 31.3 | 32.2 | 33.3 | 31 | 31.9 | 31 | 29.6 | 31 | 32 | 31 |

33 ---
30 ---

ΔL
1/100mm

1/100mm

43

Fig.6

**EP 2 522 465 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006000677 A1
- WO 2011120589 A1